Europäisches Patentamt

European Patent Office

Office européen des brevets

(11) Veröffentlichungsnummer : **0 110 394**
**B1**

(12) **EUROPÄISCHE PATENTSCHRIFT**

(45) Veröffentlichungstag der Patentschrift :
19.08.87

(21) Anmeldenummer : 83112012.6

(22) Anmeldetag : 30.11.83

(51) Int. Cl.⁴ : **B 62 D 51/04**, B 61 J 3/00,
B 61 J 3/12

(54) Antriebsvorrichtung, insbesondere für Fahrzeuge und Güter.

(30) Priorität : 01.12.82 SE 8206854

(43) Veröffentlichungstag der Anmeldung :
13.06.84 Patentblatt 84/24

(45) Bekanntmachung des Hinweises auf die Patenterteilung : 19.08.87 Patentblatt 87/34

(84) Benannte Vertragsstaaten :
DE FR GB SE

(56) Entgegenhaltungen :
AT-C-   25 172
DE-A-   468 902
DE-A- 2 060 536
DE-C-   577 345
US-A- 2 432 156
US-A- 3 653 330
US-A- 4 125 029

(73) Patentinhaber : **Rejmyre Maskin**
**Tallbacksvägen 32**
**S-610 14 Rejmyre (SE)**

(72) Erfinder : **Englund, Per Gunnar**
**Tallbacksvägen 32**
**S-610 14 Rejmyre (SE)**

(74) Vertreter : **Willquist, Bo Lorentz**
**PATS Willquist Patents S:t Larsgatan 29**
**S-582 24 Linköping (SE)**

## Beschreibung

Die Erfindung bezieht sich auf eine Antriebsvorrichtung, insbesondere für Fahrzeuge und Güter, mit einem Fahrmotor, einem vom Fahrmotor getriebenen Antriebsmittel und mindestens einer Fahrrolle. Eine derartige Antriebsvorrichtung ist aus der DE-A-2 060 536 bekannt.

Sowohl in der Fertigungsindustrie wie auch bei Reparaturbetrieben besteht ein Bedarf, Fahrzeuge und Güter leicht und vorsichtig zu bewegen, ohne den z. B. bei Fahrzeugen eingebauten Motor einzusetzen. Auch bei anderen Gelegenheiten besteht häufig ein Bedarf nach einer leicht handhabbaren Vorrichtung als Fahrantrieb.

Der Erfindung liegt die Aufgabe zugrunde, eine solche Vorrichtung zu schaffen, die einfach und kostengünstig herstellbar ist, leicht gehandhabt werden kann und umfassend und flexibel einsetzbar ist.

Die Aufgabe wird durch die im Anspruch 1 aufgeführten Merkmale gelöst. Weitere, vorteilhafte Merkmale gehen aus den abhängigen Ansprüchen hervor.

Die Erfindung wird an einem Ausführungsbeispiel anhand von Zeichnungen erläutert. Es zeigen

Figur 1 eine Ansicht der schematisch dargestellten, erfindungsgemäßen Antriebsvorrichtung,

Figur 2 eine Frontansicht der Antriebsvorrichtung nach Fig. 1,

Figur 3 eine Seitenansicht einer etwas abgewandelten Antriebsvorrichtung, von der eine Seitenwand entfernt ist,

Figur 4 eine Draufsicht auf die Antriebsvorrichtung nach Fig. 3.

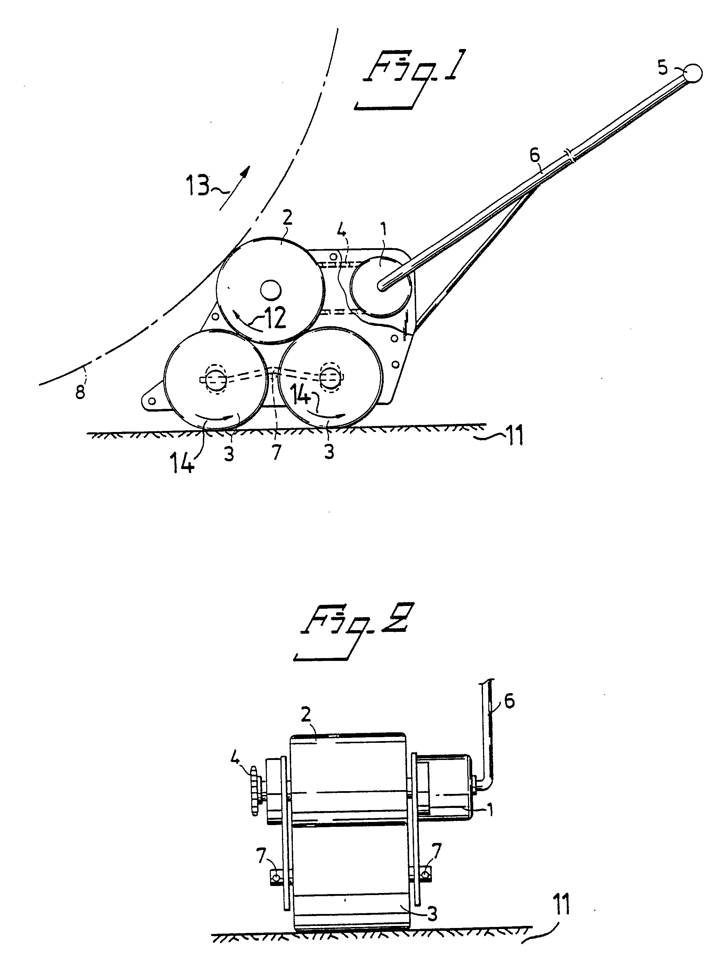

Die gezeigte Antriebsvorrichtung hat die Gestalt eines fahrbaren Wagens mit einem Fahrmotor 1 (Fig. 1), der z. B. ein Elektromotor, ein pneumatisch oder hydraulisch arbeitender Motor ist. Der Fahrmotor 1 versetzt ein Antriebsmittel 2 in Drehung, beim Ausführungsbeispiel dient hierzu eine Friktionsrolle, die von dem Fahrmotor 1 über eine Kette 4 angetrieben wird. Der Wagen läuft auf zwei breiten Fahrrollen 3, deren nicht drehbeweglich gelagerte Achsen in Langlöchern sitzen, die in Tragplatten des Wagens vorgesehen sind. Zentral an den Tragplatten sind Federmittel 7 gelagert, deren Enden auf den Achsen in den Bohrungen sitzen, wodurch die Achsen federnd gelagert sind.

Normalerweise liegen die Achsen etwas tiefer als in Fig. 1 gezeigt, und die Fahrrollen 3 befinden sich daher außer Eingriff mit den Antriebsmitteln 2. In diesem Zustand kann der Wagen leicht transportiert werden. Durch Belastung des Wagens können die Fahrrollen 3 jedoch in Kontakt mit den Antriebsmitteln 2 gebracht werden (Fig. 1). Sobald letztere angetrieben werden, werden auch die Fahrrollen 3 angetrieben.

An dem Wagen ist ein Griff 6 angebracht, der erstens der Bedienung des Wagens und zweitens dem Schutz für Kabel für die Energiezuführung zu dem Fahrmotor dient und zu diesem Zweck rohrförmig oder auf andere, geeignete Weise ausgebildet ist. Hierbei kann der Griff vorzugsweise als Rohr oder ähnliches ausgebildet sein. Steuermittel 5, wie z. B. Schalter, Ventile oder ähnliches, können an dem Griff so angebracht sein, daß sie von der Bedienungsperson leicht erreichbar sind.

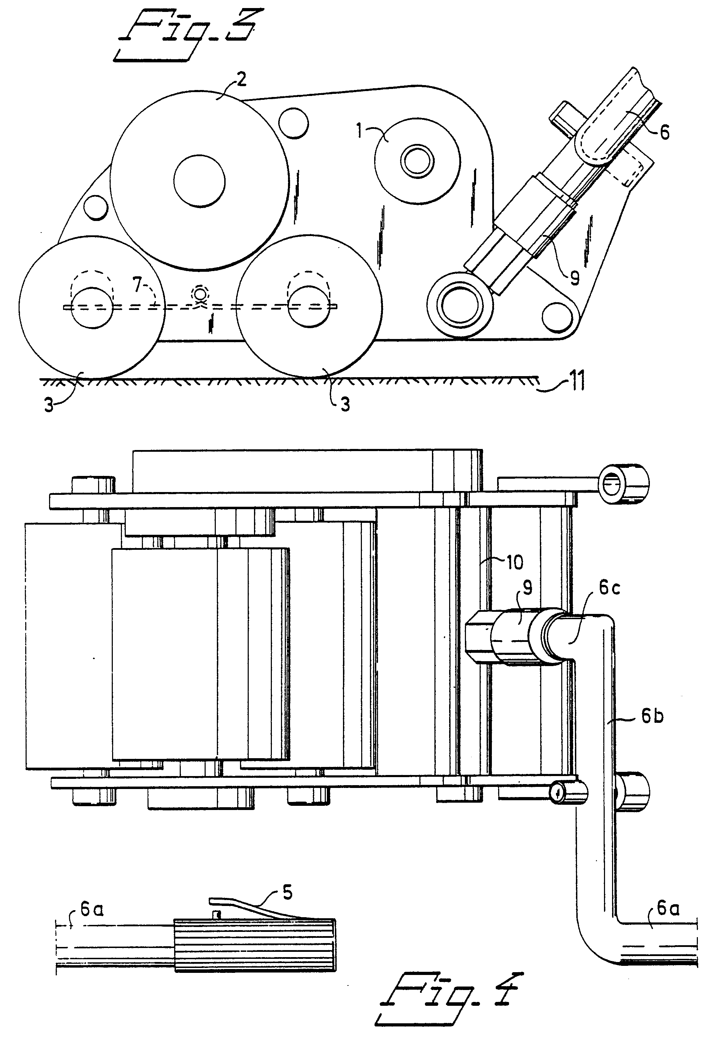

Die in folgendem beschriebene Antriebsvorrichtung ist für eine Bedienung von der linken Seite aus vorgesehen, aber in vielen Fällen ist eine Auswahlmöglichkeit hinsichtlich der Seite erwünscht, von der aus die Antriebsvorrichtung bedient werden kann. Zu diesem Zweck ist die Antriebsvorrichtung nach Fig. 3 und Fig. 4 mit einem Griff versehen, der ein erstes Teil 6a, ein gegenüber diesem etwa rechtwinklig abgebogenes Mittelteil 6b — das lang genug ist, damit es von jeder beliebigen Seite der Antriebsvorrichtung aus zu ihrem zentralen Bereich reicht — und ein Teil 6c umfaßt. Das Teil 6c ist über eine Hülse 9 verschwenkbar mittig an einem Querträger 10 der Antriebsvorrichtung angebracht.

Auch bei diesem Ausführungsbeispiel nimmt der Griff 6 vorzugsweise Kabel, Leitungen oder ähnliches zur Energiezuführung für die Antriebsvorrichtung auf. Ferner sind an dem Griff Steuermittel 5 zur Steuerung der Antriebsvorrichtung vorgesehen. Die Verbindungen zwischen dem Griff 6 und dem Querträger 10 können auch luftoder fluiddicht ausgeführt sein, so daß sie als Leitung für ein solches Fluid dienen können. Wegen der besonderen Gestalt des Griffes und der Möglichkeit, ihn gegenüber der Antriebsvorrichtung zu verschwenken, kann diese auf bequemste Weise von jeder Seite aus bedient werden.

Funktionsweise

Soll ein Fahrzeug mit Hilfe der Antriebsvorrichtung bewegt werden, wird diese gegen ein Rad 8 (Fig. 1), also ein Vorder- oder ein Hinterrad des Fahrzeugs (in der Zeichnung nicht gezeigt), gefahren. Durch das Hineinschieben der Antriebsvorrichtung in den im wesentlichen keilförmig ausgebildeten Raum, der durch das Rad 8 einerseits und den Boden 11 andererseits gebildet ist, wird der Wagen belastet, wodurch das Antriebsmittel 2 und damit der gesamte Wagen mit Ausnahme seiner Fahrrollen 3 unter Auslenkung des Federmittels 7 nach unten bewegt werden und die aus Fig. 1 ersichtliche Lage einnehmen. Gleichzeitig mit der Herstellung des Reibschlusses zwischen dem Antriebsmittel 2 und dem Rad 8 des Fahrzeugs wird auch ein Reibschluß zwischen dem Antriebsmittel 2 und den Fahrrollen 3 hergestellt. Wird das Antriebsmittel 2 jetzt in Richtung eines Pfeils 12 (Fig. 1) in Drehung versetzt, wird das Rad 8 des Fahrzeugs in Richtung eines Pfeils 13 gedreht, und die Fahrrollen 3 werden in Richtung von Pfeilen 14 gedreht. Dies entspricht einer Bewegung des Fahrzeugs in Fig. 1 nach links.

Die beschriebene Antriebsvorrichtung weist einen einfachen Aufbau auf und läßt sich wegen seines leichten und handlichen Aufbaus auch sehr leicht handhaben. Die Antriebsvorrichtung kann anstatt zum Schieben auch zum Bremsen eingesetzt werden. Bei keiner der beiden Anwendungen ist es unbedingt erforderlich, zum Schieben bzw. Bremsen ferner eine Drehbewegung einzusetzen.

**Patentansprüche**

1. Antriebsvorrichtung, insbesondere für Fahrzeuge und Güter, mit einem Fahrmotor (1), einem von dem Fahrmotor getriebenen Antriebsmittel (2) und mindestens einer Fahrrolle (3), dadurch gekennzeichnet, daß das Antriebsmittel über der Fahrrolle angeordnet ist und daß ein Federelement (7) die Fahrrolle zunächst auf Abstand zu dem Antriebsmittel (2) hält und unter Verbiegung des Federelements (7) eine Mitnahme der Fahrrolle durch das Antriebsmittel dann stattfindet, wenn die Antriebsvorrichtung in Kontakt mit dem Rad (8) des Fahrzeugs gebracht wird.

2. Antriebsvorrichtung nach Anspruch 1, dadurch gekennzeichnet, daß das Antriebsmittel (2) und die Fahrrollen (3) eine Dreieckanordnung bilden, von der die Fahrrollen die Basis und das Antriebsmittel die Spitze bilden.

3. Antriebsvorrichtung nach Anspruch 1, dadurch gekennzeichnet, daß ein fahrbarer Wagen mit einem Fahrmotor (1), der über eine Kette (4) die Antriebsmittel (2) treibt, und ein Griff (6), der eine Aufnahme für Kabel bzw. Leitungen für die Energiezufuhr zu dem Fahrmotor (1) bildet und ferner Steuermittel (5) zur Steuerung der Antriebsvorrichtung enthält, vorgesehen sind.

4. Antriebsvorrichtung nach einem der Ansprüche 1 bis 3, dadurch gekennzeichnet, daß der Griff (6a, 6b, 6c) im wesentlichen rechtwinklig abgebogen ist und mit seinem quer verlaufenden Mittelteil (6b) verschwenkbar mit dem zentralen Mittelbereich (9, 10) der Antriebsvorrichtung verbunden ist.

5. Antriebsvorrichtung nach Anspruch 1, dadurch gekennzeichnet, daß zwei Fahrrollen (3) vorgesehen und hintereinander angeordnet sind, und daß das Antriebsmittel (2) durch eine Rolle gebildet ist, die so angeordnet ist, daß sie mit beiden Fahrrollen in Eingriff gelangen und sie in gleicher Drehrichtung drehen kann.

**Claims**

1. Driving arrangement, in particular for vehicles and goods, having a traction motor (1), drive means (2) driven by the traction motor and at least one travelling roller (3), characterised in that the drive means is disposed above the driving roller and in that a spring element (7) keeps the travelling roller at a distance from the drive means (2) and by bending the spring element (7) there occurs an entrainment of the travelling roller by the drive means when the driving arrangment is brought into contact with the wheel (8) of the vehicle.

2. Driving arrangement according to Claim 1, characterised in that the drive means (2) and the travelling rollers (3) form a triangular arrangement, of which the travelling rollers form the base and the drive means the apex.

3. Driving arrangement according to Claim 1, characterised in that a mobile truck having a traction motor (1), which drives the drive means via a chain (4), and a handle (6), which forms accommodation for cables or wires for the supply of energy to the traction motor (1) and further control means (5) for controlling the driving arrangement are provided.

4. Driving arrangement according to one of Claims 1 to 3, characterised in that the handle (6a, 6b, 6c) is essentially bent at right angles and with its central transverse part (6b) is tiltably connected to the central region (9, 10) of the driving arrangement.

5. Driving arrangement according to Claim 1, characterised in that two travelling rollers (3) are provided and disposed one behind the other, and in that the drive means (2) is formed by a roller arranged in such a way that it engages with the two travelling rollers and can rotate them in the same direction.

**Revendications**

1. Dispositif d'entraînement, notamment pour des véhicules et des marchandises, comportant un moteur de traction (1), un moyen d'entraînement (2) actionné par le moteur de traction, et au moins un cylindre de roulement (3), caractérisé en ce que le moyen d'entraînement est disposé au-dessus du cylindre de roulement, et en ce qu'un organe formant ressort (7) maintient initialement le cylindre de roulement à distance par rapport au moyen d'entraînement (2) et qu'ensuite, lorsque le dispositif d'entraînement est amené en contact avec la roue (8) du véhicule, un enclenchement du cylindre de roulement par le moyen d'entraînement a lieu sous l'effet d'une déformation de l'organe formant ressort (7).

2. Dispositif d'entraînement selon la revendication 1, caractérisé en ce que le moyen d'entraînement (2) et les cylindres de roulement (3) définissent une configuration triangulaire dont les cylindres de roulement constituent la base et le moyen d'entraînement le sommet.

3. Dispositif d'entraînement selon la revendication 1, caractérisé en ce que sont prévus un chariot roulant comportant un moteur de traction (1) qui actionne le moyen d'entraînement (2) par l'intermédiaire d'une chaîne (4), et une poignée (6) qui forme un logement pour des câbles ou des conducteurs destinés à alimenter le moteur de traction (1) en énergie et comprend également un moyen de commande (5) pour manœuvrer le

dispositif d'entraînement.

4. Dispositif d'entraînement selon l'une des revendications 1 à 3, caractérisé en ce que la poignée (6a, 6b, 6c) est pliée sensiblement à angle droit et est reliée à pivotement à la zone médiane centrale (9, 10) du dispositif d'entraînement par sa partie médiane (6b) qui s'étend obliquement.

5. Dispositif d'entraînement selon la revendication 1, caractérisé en ce que deux cylindres de roulement (3) sont prévus et disposés l'un derrière l'autre, et en ce que le moyen d'entraînement (2) est constitué par un cylindre disposé de manière à pouvoir venir en prise avec les deux cylindres de roulement et les faire tourner dans la même direction de rotation.

Fig.1

Fig.2

1

Fig.3

Fig.4